# DEMANDE DE BREVET EUROPEEN

(11) **EP 2 534 933 A1**
(43) Date de publication de la demande: **19.12.2012**
(21) Numéro de dépôt: 12172008.0
(22) Date de dépôt: 14.06.2012
(51) Int. Cl.: A01B 49/02, A01B 49/06, A01B 73/00

(54) **Semoir avec des éléments de rappui constituant les roues de transport**

(30) Priorité: 17.06.2011 FR 1155318
(71) Demandeur: KUHN S.A., 67700 Saverne (FR)
(72) Inventeur: Seemann, Michel, 57370 Danne et Quatre Vents (FR); Potier, Philippe, 57370 Veckersviller (FR)
(74) Mandataire: Esch, Esther Evelyne

(57) **Abrégé**

La présente invention concerne un semoir (1, 101) comportant un châssis (2, 102) portant des organes de semis (4) et des éléments de rappui (5, 105) disposés transversalement à la direction d'avance (A), lesdits éléments de rappui (5, 105) s'étendant sur toute la largeur de travail, chaque organe de semis (4) étant disposé dans la trace laissée par un desdits éléments de rappui (5, 105) et chaque élément de rappui (5, 105) rappuyant au moins une largeur couvrant deux organes de semis (4).

Le semoir est remarquable en ce que la voie (12), desdits éléments de rappui (5, 105) utilisés pour le transport, s'étend dans le gabarit routier et que la largeur desdits éléments de rappui (5, 105) constituant les roues de transport (13) est plus importante que la largeur desdits autres éléments de rappui (5, 105).

## Description

La présente invention se rapporte au domaine technique général du machinisme agricole. L'invention concerne un semoir comportant un châssis portant des organes de semis et des éléments de rappui disposés transversalement à la direction d'avance, lesdits éléments de rappui s'étendant sur toute la largeur de travail, chaque organe de semis étant disposé dans la trace laissée par un desdits éléments de rappui et chaque élément de rappui rappuyant au moins une largeur couvrant deux organes de semis.

Sur une machine connue de ce genre, le châssis supporte une trémie et des organes de semis. Les organes de semis sont disposés l'un à côté de l'autre selon un écartement déterminé et suivant deux rangées transversales. Le châssis s'appuie sur le sol par l'intermédiaire d'éléments de rappui tels que des pneus montés sur un arbre commun d'axe horizontal et transversal à la direction d'avance. Ces éléments de rappui sont enfilés sur l'arbre et présentent un même diamètre et une même largeur. Les éléments de rappui précèdent les organes de semis compte tenu de la direction d'avance de sorte que toute la largeur de travail soit rappuyée. Chaque organe de semis est disposé dans la trace laissée par l'un des éléments de rappui. Chaque élément de rappui rappuie une largeur couvrant deux organes de semis, il s'agit d'éléments de rappui présentant une faible largeur.

Au transport, tous les éléments de rappui s'étendant dans le gabarit routier restent au sol pour supporter le semoir. Il en résulte que la stabilité du semoir est réduite notamment sur des chemins de terre où le semoir doit circuler dans les traces plus profondes laissées par les roues du tracteur. En effet, cette instabilité dans les chemins entraîne un report de charge important sur un nombre limité d'éléments de rappui.

La présente invention a pour but de remédier aux inconvénients précités. Elle doit notamment proposer un semoir avec une stabilité au transport accrue.

A cet effet, une importante caractéristique de l'invention consiste en ce que la voie desdits éléments de rappui utilisés pour le transport s'étend dans le gabarit routier et que la largeur desdits éléments de rappui constituant les roues de transport est plus importante que la largeur desdits autres éléments de rappui. Grâce à cette caractéristique, le semoir sera plus stable lors de ses déplacements puisqu'il repose sur un nombre limité d'éléments de rappui. Lors du transport, notamment sur chemins, le semoir selon l'invention est donc dans une position équilibrée et stable.

D'autres caractéristiques et avantages de l'invention se dégageront de la description qui va suivre en regard des dessins annexés qui ne sont donnés qu'à titre d'exemples non limitatifs de l'invention. Sur ces dessins :
- la figure 1 représente une vue latérale d'un semoir, selon la présente invention dans une configuration de travail, attelé à un tracteur,
- la figure 2 représente une vue de dessus d'un semoir dont la largeur de travail s'étend dans le gabarit routier,
- la figure 3 représente une vue de dessus d'un semoir dont la largeur de travail s'étend au-delà du gabarit routier.

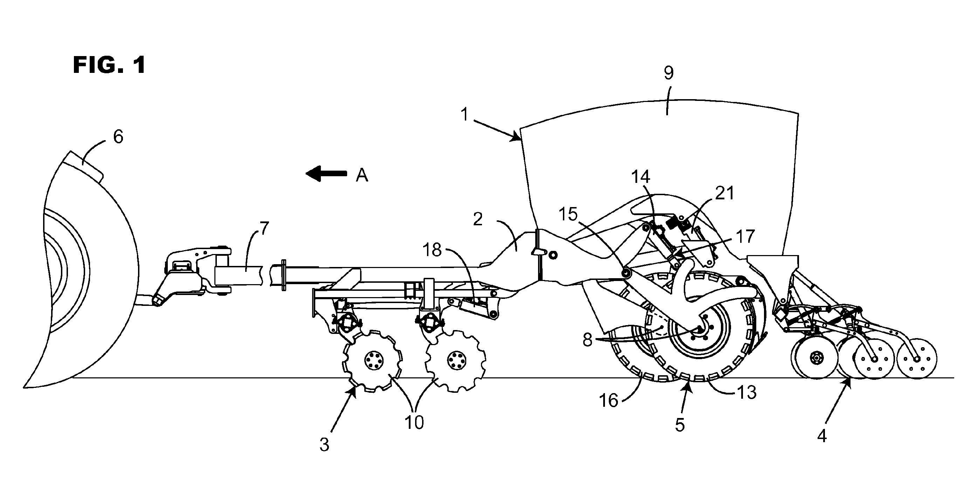

La machine agricole selon l'invention est un semoir (1) en lignes. Ce semoir (1) réalise en un seul passage l'ensemble des travaux pour l'implantation d'une culture, c'est-à-dire la préparation, le rappui et le semis. La figure 1 représente un semoir dans la configuration de travail. Le semoir (1) comporte un châssis (2) portant des organes de travail (3), des organes de semis (4) et des éléments de rappui (5) sur le sol. Les éléments de rappui (5) sont solidaires du châssis (2) et combinent les fonctions de rappuyage et de guidage des organes de travail et de semis (3, 4). Les éléments de rappui (5) ont pour fonction d'émietter et de tasser le lit de semence. Un tracteur (6) est amené à déplacer et à animer le semoir (1) suivant une direction d'avance indiquée par la flèche (A). Dans la suite de la description, les notions suivantes "avant", "arrière" et "devant", "derrière" sont définies par rapport au sens d'avance (A). Le semoir (1) est attelé au tracteur (6) par l'intermédiaire d'un timon (7) relié au châssis (2).

Le semoir (1) repose sur le sol au moyen d'éléments de rappui (5) lors du travail, des demi-tours et lors du transport. Les éléments de rappui (5) roulent sur le sol en pivotant autour d'un axe (8) respectif. Chaque axe (8) est sensiblement horizontal et perpendiculaire à la direction d'avance (A). Le châssis (2) porte une trémie (9) qui s'étend sensiblement à la verticale des éléments de rappui (5). La trémie (9) permet le stockage de graines qui sont dosées puis acheminées vers les organes de semis (4). Les organes de travail (3) se composent d'outils de préparation du sol qui permettent par exemple d'ameublir, d'émotter et de niveler le lit de semis avant d'implanter la semence.

La profondeur de travail des organes de travail (3), comme des organes de semis (4), est réglable par rapport au châssis (2). Le réglage est effectué via un dispositif de réglage respectif tel qu'un vérin à double effet. Le réglage est effectué par rapport au châssis (2). Selon une alternative, le dispositif de réglage est un dispositif comparable à un vérin à double effet.

Dans l'exemple de réalisation de la figure 1, les organes de travail (3) sont des disques (10) qui ameublissent le sol en surface. Les disques (10) sont montés sur des éléments en caoutchouc pour s'adapter aux ondulations du terrain et s'effacer en présence de pierres. Les disques (10) sont concaves et crénelés pour une meilleure pénétration dans un sol dur. Les organes de travail (3) assurent une préparation et un nivellement du sol par l'intermédiaire de lames niveleuses (non représentées). Les éléments de rappui (5) ont pour fonction de niveler et de parfaire l'action des outils précédents en diminuant la taille des mottes en surface. Les éléments de rappui (5) tassent légèrement le sol pour améliorer le contact des graines avec la terre. Les organes de semis (4) sont par exemple des socs à disques. Les conditions d'utilisation d'un tel semoir sont très diverses quant à la nature et à la consistance du sol et même dans des conditions avec une présence importante de débris végétaux.

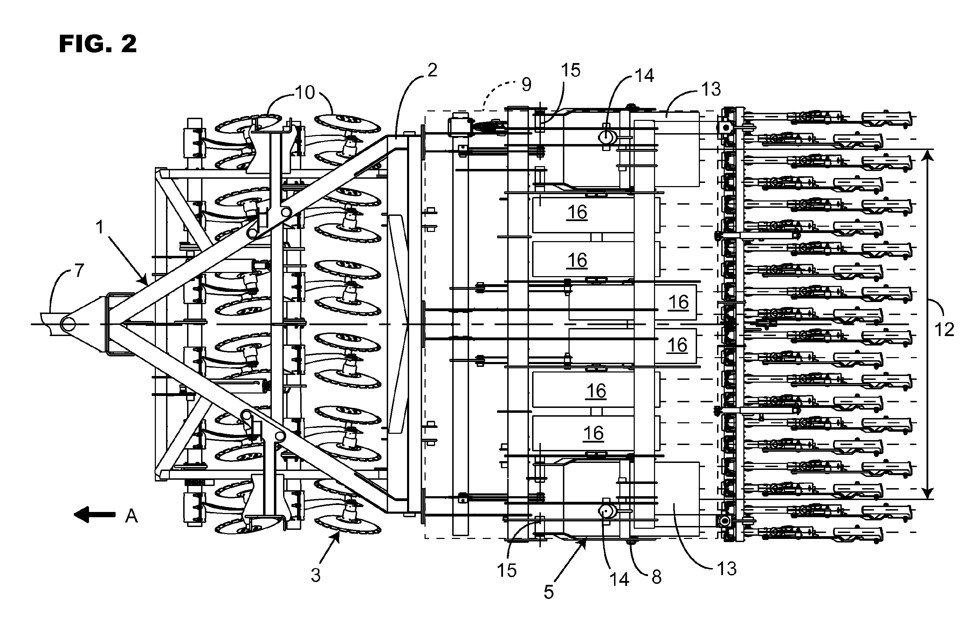

La figure 2 représente un semoir (1) dont la largeur de travail s'étend dans le gabarit routier, c'est-à-dire que la largeur de transport correspond sensiblement à la largeur de travail. Dans la plupart des pays européens et notamment en France, la législation limite la largeur de la machine à 3 mètres et la hauteur à 4 mètres. Ces dimensions correspondent à l'encombrement en largeur et en hauteur du gabarit routier. On remarque que les éléments de rappui (5) et les organes (3, 4) sont disposés transversalement à la direction d'avance (A), sur toute la largeur. Les éléments de rappui (5) sont également répartis sur toute la largeur de travail du semoir (1). Ils s'étendent entre les organes de travail (3) et les organes de semis (4) compte tenu de la direction d'avance (A). Ainsi, les graines seront déposées dans un sol rappuyé puisque chaque organe de semis (4) est disposé dans la trace laissée par un desdits éléments de rappui (5). Ceci est symbolisé par les traits discontinus entre les organes de semis (4) et les éléments de rappui (5). On peut remarquer que chaque élément de rappui (5) rappuie au moins une largeur couvrant deux organes de semis (4).

Selon une importante caractéristique de l'invention, la voie (12), desdits éléments de rappui (5) utilisés pour le transport, s'étend dans le gabarit routier et la largeur desdits éléments de rappui (5), constituant les roues de transport (13), est plus importante que la largeur desdits autres éléments de rappui (5). En transport, le semoir doit respecter la législation règlementant la circulation sur la voie publique pour pouvoir être déplacé avec le tracteur (6). La voie (12) est définie comme étant la distance transversale entre les centres des surfaces de contact au sol des éléments de rappui (5) utilisés pour le transport. Lors des déplacements sur routes et chemins le semoir reposera alors au sol via un nombre limité d'éléments de rappui (5) ce qui accroît sa stabilité. Avec un semoir plus stable, la vitesse de déplacement peut être augmentée. Les roues de transport (13) sont celles situées aux extrémités extérieures de l'encombrement en largeur du gabarit routier. Elles s'étendent aux extrémités extérieures de la largeur hors-tout de manière à respecter le gabarit routier. Ainsi, les roues de transport (13) s'étendent dans la limite autorisée du gabarit routier. Avec une voie (12) large, on améliore la stabilité du semoir (1) lors des déplacements.

Les éléments de rappui (5) utilisés pour le transport désignés comme étant les roues de transport (13) sont susceptibles de passer d'une position de travail à une position de transport, et inversement, au moyen d'au moins un actionneur (14). Les roues de transport (13) sont articulées sur le châssis (2) via une articulation (15) d'axe horizontal et perpendiculaire à la direction d'avance (A). L'actionneur (14) est avantageusement un vérin du type à double effet. L'utilisateur commande l'actionneur (14) ce qui provoque la sortie du piston et fait pivoter les roues de transport (13) vers le sol pour passer en position transport depuis la position de travail. De préférence, chacune des roues de transport (13) est équipée d'un tel actionneur (14). Grâce aux actionneurs (14), il est possible de régler la hauteur du châssis (2) par rapport au sol. Au transport, le semoir (1) s'appuie au sol uniquement au moyen des roues de transport (13) pour garantir une bonne tenue de route. Les autres éléments de rappui (5), disposés entre les roues de transport (13), qui sont montés fixes sur le châssis (2), s'éloignent du sol avec le châssis (2).

D'une manière avantageuse, les roues de transport (13) présentent une largeur correspondant, au minimum, au double de la largeur d'un des autres éléments de rappui (5). Ces autres éléments de rappui (5) sont utilisés exclusivement au travail et en manoeuvre de demi-tours. En bout de champ, tous les éléments de rappui (5) porte le semoir (1) ce qui évite un tassement excessif du lit de semence. Dans l'exemple de réalisation, tous les éléments de rappui (5) présentent un même diamètre. Les roues de transport (13) sont donc des roues larges alors que les autres éléments de rappui (5) sont étroits. La charge supportée par les roues de transport (13) larges est plus importante que celle pour une roue étroite (16). Ces éléments de rappui (5) sont des roues constituées d'un pneumatique gonflé d'air pour assurer le contact de la roue avec le sol. Le pneumatique est supporté par une jante. La pression de rappui au sol d'un élément de rappui (5) dépend de la pression de gonflage du pneumatique. Un gonflage approprié améliore l'adhésion du pneumatique au sol. Pour obtenir un rappui homogène sur toute la largeur de travail, il est recommandé que la pression de gonflage soit identique pour tous les éléments de rappui (5).

Pour une circulation sécurisée, le semoir (1) comporte également un système de freinage (non représenté) intégré dans au moins deux roues de transport (13). Grâce aux roues larges de transport (13), le système de freinage peut être totalement intégré au niveau de la jante. De préférence, un système de freinage est intégré dans chaque roue de transport (13). Le système de freinage peut être hydraulique ou pneumatique.

La figure 2 montre la disposition des éléments de rappui (5) selon un exemple de réalisation. La trémie (9) est représentée en traits discontinus. Les éléments de rappui (5) s'étendent sur toute la largeur de travail. Ils sont juxtaposés et décalés les uns par rapport aux autres compte tenu de la direction d'avance (A). Une telle disposition permet une répartition du poids du semoir (1) sur une plus grande surface au sol. Les roues de transport (13) sont constituées par des éléments de rappui (5) extérieurs. Le décalage entre les éléments de rappui (5) est réalisé tel que les roues de transport (13) s'étendent dans un même plan vertical transversal à la direction d'avance (A) pour assurer un bon comportement routier. Grâce au décalage des éléments de rappui (5), la puissance de traction nécessaire par rapport au poids du semoir (1) est réduite. Le flux de terre et les résidus s'évacuent plus facilement. Chaque élément de rappui (5) étroit couvre deux organes de semis (4) et chaque roue de transport (13) couvre quatre organes de semis (4). D'une manière avantageuse, le montage des éléments de rappui étroits sur le châssis (2) est réalisé par paire. Les éléments de rappui (5) sont répartis de manière symétrique par rapport à un plan vertical médian du châssis (2).

Il est possible d'augmenter la charge que le pneumatique des roues de transport (13) peut supporter au transport en augmentant la pression de gonflage du pneumatique. Dans ce cas, le semoir (1) est équipé, en sus, d'un dispositif de réglage de la pression au sol (17). Ce dispositif de réglage de la pression au sol (17) est associé aux roues de transport (13). Il permet d'adapter la pression au sol des roues de transport (13) à la pression au sol des autres éléments de rappui (5). Ces autres éléments de rappui (5) étant des roues étroites (16). La pression de rappui est ainsi sensiblement uniforme sur toute la largeur de travail pour des conditions de semis et germination des graines optimales. La figure 1 représente le semoir (1) dans une position de travail, l'actionneur (14) s'étend alors dans une position plus ou moins rétractée. La modification de la longueur de l'actionneur (14) est réalisée au moyen de cales placées sur le piston. Les cales limitent la position rétractée du piston dans le cylindre. Selon une alternative, le réglage peut être hydraulique. Les différentes positions peuvent être détectées au moyen de capteurs.

Lors des manoeuvres de demi-tours, tous les éléments de rappui (5) restent au sol. Le rappui du sol est régulier sur toute la largeur du semoir (1) puisque le poids est uniformément réparti sur l'ensemble des éléments de rappui (5). Seuls les organes de travail (3) et les organes de semis (4) sont dégagés du sol via les dispositifs de réglage correspondants. L'actionneur (14), quant à lui, n'est pas commandé pour le passage de la position de travail à la position de demi-tour, et inversement. Sur la figure 1 sont représentés, un premier dispositif (18) pour la commande de relevage et d'abaissement des disques et un deuxième dispositif (19) pour les organes de semis (4). Ces dispositifs (18, 19) permettent également le réglage de la profondeur de travail.

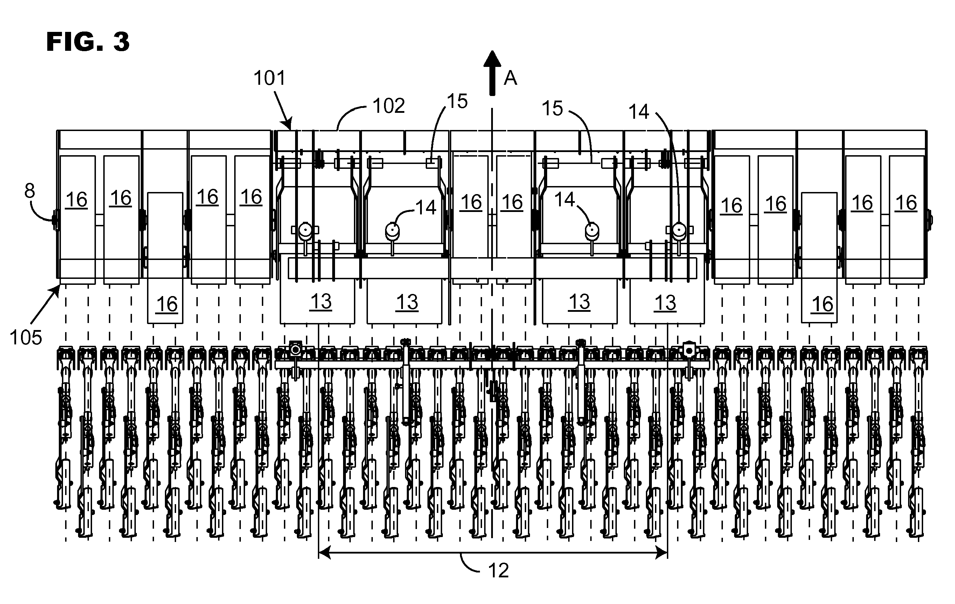

La figure 3 représente un autre exemple de réalisation d'un semoir conforme à l'invention. Ce semoir (101) comporte un certain nombre d'éléments qui ont été décrits précédemment. Ces éléments garderont par conséquent le même numéro de repère et ne seront pas décrits une nouvelle fois. Les éléments comparables à des éléments du semoir (1) seront affectés du même numéro de repère mais augmentés de 100. Ils ne seront décrits que si cela s'avère nécessaire.

Ainsi, le semoir (101) présente une la largeur de travail qui dépasse au-delà du gabarit routier autorisé pour la circulation sur les routes. Le semoir (101) est représenté dans sa position de travail. Seuls les organes de rappui (105) et les organes de semis (4) sont représentés sur la figure 3. On voit que le châssis (102) est conçu de manière à être repliable, il est pourvu d'un châssis central et de parties latérales. Pour le transport, les parties latérales sont déplacées de manière à ce que le semoir (101) respecte la législation règlementant la circulation sur la voie publique. Comme ce semoir (101) présente une grande largeur de travail, il repose au sol via quatre roues de transport (13). Chaque roue de transport (13) est associée à un actionneur (14) permettant de passer de la position de travail à la position de transport, et inversement. Grâce à l'actionneur (14), la pression de rappui au sol peut être adaptée de manière à obtenir un rappui similaire sur toute la largeur de travail. Les quatre roues de transport (13) sont alignées dans un même plan vertical transversal à la direction d'avance (A).

Dans cet autre exemple de réalisation, les éléments de rappui (105) sont disposés décalés les uns par rapport aux autres. Une disposition symétrique par rapport au plan vertical médian nécessite qu'un des éléments de rappui, notamment une roue étroite (16), soit monté de manière individuelle sur le châssis (2). Une telle roue étroite (16) s'étend de chaque côté du plan vertical médian.

Un semoir présentant des éléments de rappui de diamètre différents est aussi conforme à l'invention. Dans ce cas, les roues de transport présentent un diamètre supérieur aux autres éléments de rappui.

Dans un exemple de réalisation supplémentaire, les éléments de rappui sont réalisés sous forme de rouleau. Le rouleau pouvant être pourvu d'une bande de roulement à profil sillonneur.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Semoir (1, 101) comportant un châssis (2, 102) portant des organes de semis (4) et des éléments de rappui (5, 105) disposés transversalement à la direction d'avance (A), lesdits éléments de rappui (5, 105) s'étendant sur toute la largeur de travail, chaque organe de semis (4) étant disposé dans la trace laissée par un desdits éléments de rappui (5, 105) et chaque élément de rappui (5, 105) rappuyant au moins une largeur couvrant deux organes de semis (4), ***caractérisé en ce que*** la voie (12) desdits éléments de rappui (5, 105) utilisés pour le transport s'étend dans le gabarit routier et que la largeur desdits éléments de rappui (5, 105) constituant les roues de transport (13) est plus importante que la largeur desdits autres éléments de rappui (5, 105).

2. Semoir selon la revendication 1, ***caractérisé en ce que*** lesdites roues de transport (13) sont celles situées aux extrémités extérieures de l'encombrement en largeur du gabarit routier.

3. Semoir selon la revendication 1 ou 2, ***caractérisé en ce que*** lesdits éléments de rappui (5, 105) disposés entre lesdites roues de transport (13) sont éloignés du sol pour le transport.

4. Semoir selon l'une quelconque des revendications 1 à 3, ***caractérisé en ce que*** chaque roue de transport (13) présente une largeur correspondant au minimum au double de la largeur d'un élément de rappui (5, 105) utilisé exclusivement au travail.

5. Semoir selon l'une quelconque des revendications 1 à 4, ***caractérisé en ce que*** lesdits éléments de rappui (5, 105) sont décalés les uns par rapport aux autres dans la direction d'avance (A).

6. Semoir selon l'une quelconque des revendications 1 à 5, ***caractérisé en ce que*** lesdites roues de transport (13) s'étendent dans un même plan transversal à la direction d'avance (A).

7. Semoir selon l'une quelconque des revendications 1 à 6, ***caractérisé en ce que*** un système de freinage est intégré dans au moins deux roues de transport (13).

8. Semoir selon l'une quelconque des revendications 1 à 7, ***caractérisé en ce* qu'**un système de réglage de la pression au sol (17) est associé à chaque roue de transport (13).

9. Semoir selon l'une quelconque des revendications 1 à 8, ***caractérisé en ce que*** lesdits éléments de rappui étroits sont montés par paire sur ledit châssis (2).

10. Semoir selon l'une quelconque des revendications 1 à 9, ***caractérisé en ce que*** lesdits éléments de rappui (5, 105) sont répartis de manière symétrique par rapport au plan vertical médian dudit châssis (2, 102), certains éléments de rappui étroits sont montés individuellement sur ledit châssis (2, 102).

11. Semoir selon l'une quelconque des revendications 1 à 10, ***caractérisé en ce que*** lesdits éléments de rappui (5, 105) présentent tous un diamètre similaire.
